**Europäisches Patentamt**

**European Patent Office**

**Office européen des brevets**

(19)

(11) Veröffentlichungsnummer: **0 052 714**
**B2**

# (12) NEUE EUROPÄISCHE PATENTSCHRIFT

(45) Veröffentlichungstag der neuen Patentschrift:
16.03.88

(21) Anmeldenummer: 81107599.3

(22) Anmeldetag: 24.09.81

(51) Int. Cl.⁴: **H 01 S 3/097**, H 01 S 3/03

(54) **TE-Laser-Verstärker.**

(30) Priorität: 22.11.80 DE 3044023

(43) Veröffentlichungstag der Anmeldung:
02.06.82 Patentblatt 82/22

(45) Bekanntmachung des Hinweises auf die Patenterteilung:
27.12.84 Patentblatt 84/52

(45) Bekanntmachung des Hinweises auf die Entscheidung
über den Einspruch:
16.03.88 Patentblatt 88/11

(84) Benannte Vertragsstaaten:
BE CH DE FR GB IT LI NL

(56) Entgegenhaltungen:
EP-A-0 024 576
WO-A-79/00432
GB-A-2 035 674

Applied Physics, Vol. 23, 1980, Seiten 341-344

(73) Patentinhaber: ELTRO GmbH Gesellschaft für
Strahlungstechnik, Kurpfalzring 106 Postfach 10
21 20, D-6900 Heidelberg 1 (DE)

(72) Erfinder: Karning, Heinrich, Albert- Fritz- Strasse 6,
D-6900 Heidelberg (DE)
Erfinder: Prein, Franz, Tulpenweg 3, D-6901
Waldhilsbach (DE)
Erfinder: Vierling, Karl- Heinz, Johann- Sebastian-
Bach- Strasse 46, D-6901 Bammental (DE)

(74) Vertreter: Muschka, Wilhelm, Dipl.- Ing., Eltro
GmbH Gesellschaft für Strahlungstechnik
Kurpfalzring 106 Postfach 10 21 20, D-6900
Heidelberg 1 (DE)

EP 0 052 714 B2

**Beschreibung**

Die Erfindung betrifft einen TE-Laser-Verstärker von im wesentlichen symmetrischem Aufbau mit symmetrischer Entladestromverteilung, bestehend aus einem wenigstens zwei einander gegenüberliegende Entladungsflächen aufweisenden gasumströmten Elektrodensystem, das mit einer nach aussen führenden Hochspannungsleitung in dem Resonator- bzw. Entladungsraum eines Gehäuses aus Metall angeordnet ist, das bei Laserbetrieb an seiner einen Stirnseite den Laserstrahl in Richtung der anderen Stirnseite reflektierende Spiegel aufweist, die mit im Bereich dieser zweiten Stirnseite befestigten teildurchlässigen Spiegeln zusammenwirken, während bei Verstärkerbetrieb anstelle der Spiegel die verstärkte Laserstrahlung hindurchlassende Abschlussfenster vorgesehen sind, wobei Spiegel und Fenster in den Freiräumen zwischen den Elektroden angeordnet sind.

Ein solcher Laser-Verstärker ist aus dem Dokument EP-A-0 001 032 bekannt. Auch die WO-A-79/00432 zeigt und beschreibt einen ähnlichen Laser. Diesen Schriften ist jedoch kein Hinweis auf die Möglichkeit der Beeinflussung des elektrischen Potentialverlaufs zu entnehmen.

Augabe der Erfindung ist es, für den gattungsgemässen Laser-Verstärker Lebensdauer und Leistung pro Volumen zu vergrössern. Gelöst wird diese Aufgabe erfindungsgemäss dadurch, dass an den Längswänden des Gehäuses im Bereich zwischen den Elektroden Mittel zur magnetischen Beeinflussung des elektrischen Potentialverlaufs, d.h. der elektrischen Feldstärke, vorgesehen sind. Der erfindungsgemässe Laser weist eine homogenere Feldverteilung auf und gewährleistet eine längere Lebensdauer des Gases. Dies ist in besonderer Weise für einen sogenannten Sealed-off-Betrieb (= total abgeschlossener Betrieb) von Bedeutung, weil hierfür nur einmal, nämlich bei der Herstellung des Laser-Verstärkers, Gas eingefüllt werden bzw. später kein weiterer Gasaustausch mehr erfolgen kann.

Weiterbildungen der Erfindung sind Gegenstand der Unteransprüche.

Im folgenden werden an Hand einer Zeichnung Ausführungsbeispiele der Erfindung näher erläutert, wobei die in den einzelnen Figuren einander entsprechenden Teile dieselben Bezugszeichen aufweisen.

Es zeigt

Fig. 1 den Längsschnitt durch einen weitgehend symmetrisch aufgebauten Laser-Verstärker gestreckter Bauform gemäss dem Stand der Technik,

Fig. 2 einen Querschnitt durch die Bauform gemäss Fig. 1 mit zwei zusätzlichen Hilfselektroden,

Fig. 3 einen Querschnitt ähnlich Fig. 2 mit kathodenseitig gekrümmt austretenden Feldlinien,

Fig. 4 einen Querschnitt wie in Fig. 3 mit kathodenseitig gleichförmig austretenden Feldlinien,

Fig. 5 den gekrümmten Verlauf von Feldlinien bei gleichgrossem Querschnitt von Anode und Kathode,

Fig. 6 einen erfindungsgemässen Laser-Verstärker mit einem Querschnitt wie in Fig. 4 mit grossem Anoden- und kleinem Kathodenquerschnitt sowie magnetischen seitlichen Mitteln zur Beeinflussung des Potentialverlaufs,

Fig. 7 einen erfindungsgemässen Laser-Verstärker mit einem Querschnitt wie in den Fig. 3 und 4 mit einer Verengung in den Gehäuselängswänden im Bereich zwischen den Elektroden,

Fig. 8 eine Verengung wie in Fig. 7, deren Querschnitt sich über die gesamte Längswandhohe verteilt.

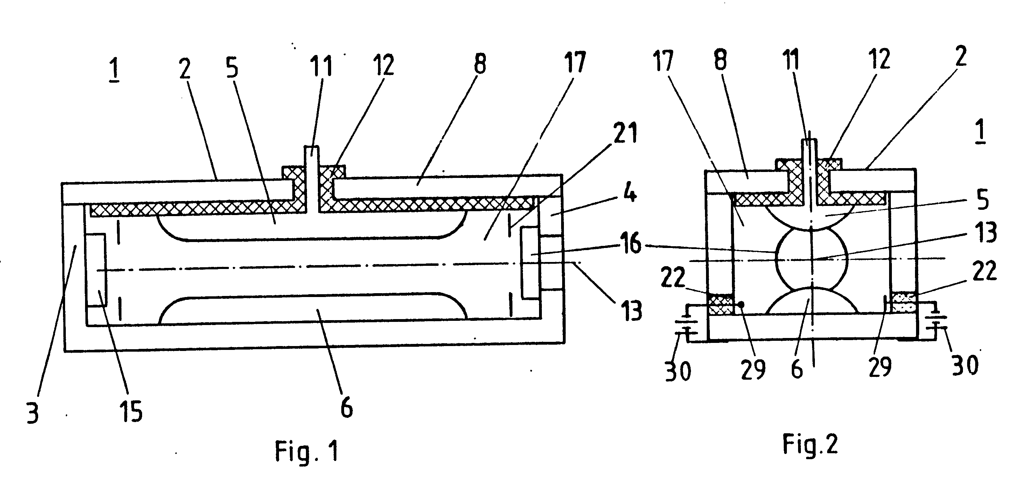

Fig. 1 und 2 zeigen die Prinzipskizze eines gestreckten TE-Laser-Verstärkers 1, bei dem an der Bodenseite und an dem Deckel 8 des Resonatorbzw. Entladungsraums 17 je eine Elektrode 5 bzw. 6 befestigt ist. Mit 11 ist die Hochspannungszufuhr und mit 12 der diese und die Elektrode 5 gegenüber dem übrigen Gehäuse 2 aus Metall isolierende Teil bezeichnet. Es wäre auch denkbar, dass die den Hochspannungspuls zuführende Elektrode 5 im Gehäuse 2 frei aufgehängt ist.

Wird der TE-Laser nicht als Sender, sondern als Verstärker verwendet, müssen die Spiegel 15 und 16 durch Abschlussfenster ersetzt werden, die für die Strahlung durchlässig sind. Unmittelbar nach der zwischen den Elektroden stattfindenden Entladung wird hierbei durch eines dieser Fenster ein Puls in das vorhandene Medium hineingeschossen. Dieser Puls hat in der Regel ein schöneres Strahlprofil und eine geringere Leistung. Der dann das Gehäuse 2 durch das andere Fenster verlassende Gesamtimpuls ist um etwa 3 bis 10 % verstärkt.

Die eigentliche Gasentladung wird mit Hilfe von Triggerdrähten (nach Lambert-Pearson), sogenanntem Koronaschneiden, Oberflächenentladungen oder UV-Vorionisationen durch Funkenstrecken initiiert bzw. stabilisiert. Der hierfür erforderliche Schaltimpuls besitzt eine Halbwertsbreite von typisch < 100 nsec und eine Anstiegsflanke von typisch < 20 nsec. Diese schnelle Flanke initiiert die Gasentladung aufgrund der über die Hochspannungszufuhr 11 eingespeisten hohen Spannung.

In der optischen Achse 13 ist an der - in Blickrichtung - linken inneren Stirnseite 3 der die Strahlung 100-%-ig reflektierende Spiegel 15 und an der rechten inneren Stirnseite 4 der für die Strahlung teildurchlässige Spiegel 16 befestigt. Der Spiegel 15 kann bei einem anderen zeichnerisch nicht dargestellten Ausführungsbeispiel auch als Tripel ausgebildet sein, wobei Spiegel und/oder Tripel bedarfsweise auch in diese Stirnflächen integriert sind bzw. dieselben selbst darstellen können.

Der Deckel 8 wird mit Schrauben an den ihm zugekehrten Flächen des Gehäuses 2 befestigt und mit einem O-Ring abgedichtet, nachdem der Innenraum zuvor mit aus der Vakuumtechnik bekannten Methoden mit Gas gefüllt wurde. Auch andere Verschlussmöglichkeiten wie z. B. Verkleben, Verlöten oder Elektronenschweissen sind denkbar.

Insoweit handelt es sich im wesentlichen um aus dem Dokument EP-A-0 001 032 bekannten Stand der Technik.

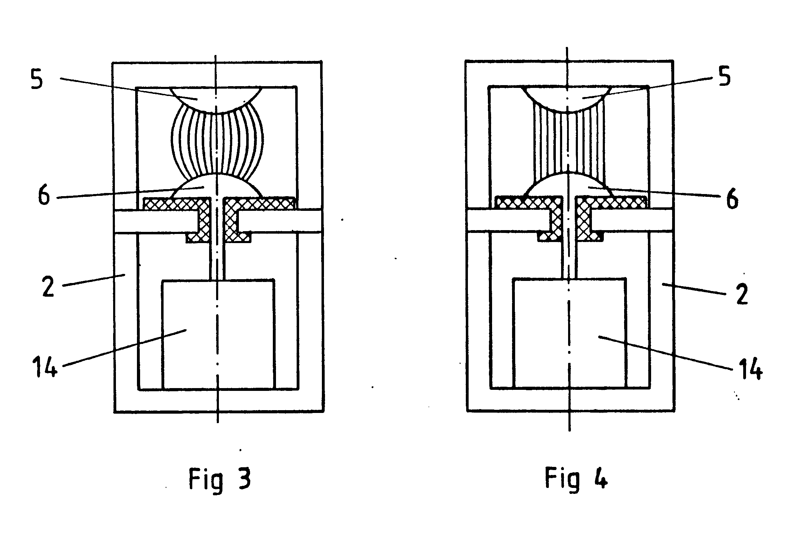

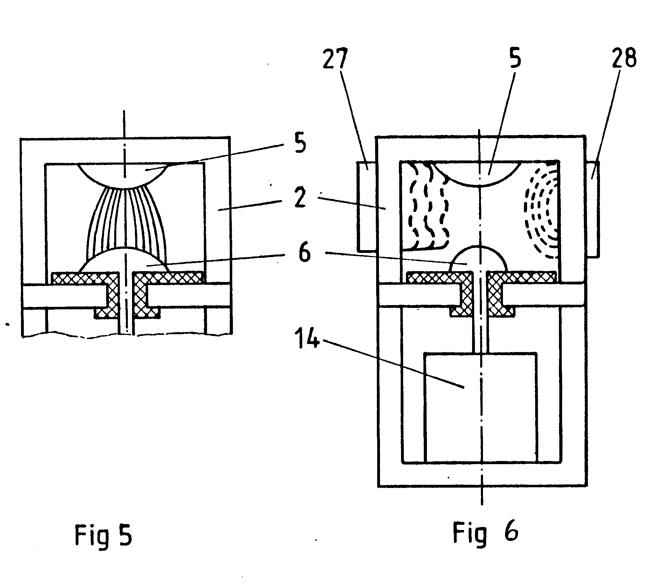

Die Fig. 3 und 4 zeigen nun Möglichkeiten, die Gasentladung des vorstehend beschriebenen Lasers durch verschiedene Arten der Feldbeeinflussung zu verbessern sowie unterschiedliche Verstärkungen zu erzielen: Das mit Hilfe des Hochspannungsimpulsgenerators 14 durch die Gasentladung erzeugte Plasma, dessen Querschnitt in Strahlungsrichtung so gross wie nötig und so klein wie möglich sein soll, wird bei den gegebenen Komponenten Spannung, Druck und Resonatorgeometrie in bezug auf die Modenblende 21 (Fig. 1) über Einwirkung auf das magnetische und elektrische Feld mitbeeinflusst. In Fig. 3 treten die Feldlinien im Initialbereich der Kathode 6 relativ stark aufgeweitet aus, während nach einer in Fig. 4 dargestellten Umpolung der Anregungsspannung die Feldlinien fast parallel (homogen) austreten. Dies beruht u.a. auf der Erkenntnis, dass während des Aufbaus einer Entladung eine wesentliche Richtungsänderung der initial austretenden Feldlinien nicht mehr möglich ist. Das Umpolen der Anregungsspannung erfolgt zum Zweck der Steuerung des Verstärkungsverlaufs im verstärkenden Medium, der seinerseits wieder für die Modenauswahl verwendet wird. Insgesamt erhält dadurch das Plasma ein ausgeprägt homogenes Verhalten - die Anregungsdichten sind weitgehend konstant.

Dieser Effekt lässt sich noch durch eine ganze Anzahl in den Fig. 5 bis 11 angedeuteter Massnahmen unterstützen. So kann der in Fig. 5 aufgezeigte anoden- und kathodenseitig unterschiedliche Verlauf von Feldlinien dadurch ausgeglichen werden, dass die Querschnitte von Anode 5 und Kathode 6 unterschiedlich ausgebildet sind. Beide besitzen an sich bekannte Profile - z. B. Rogowski, Chang u.a. In Fig. 6 ist der Querschnitt der Anode grösser als derjenige der jeweils zugehörigen Kathode.

Ausserdem sind in den Ausführungsbeispielen der Erfindung an den Längswänden des Gehäuses 2 verschiedene Mittel zur Beeinflussung des elektrischen Potentialverlaufs (der elektrischen Feldstärke) vorgesehen. Im Fall der Fig. 6 sind hierfur Permanent- oder Elektromagnete 27, 28 vorgesehen.

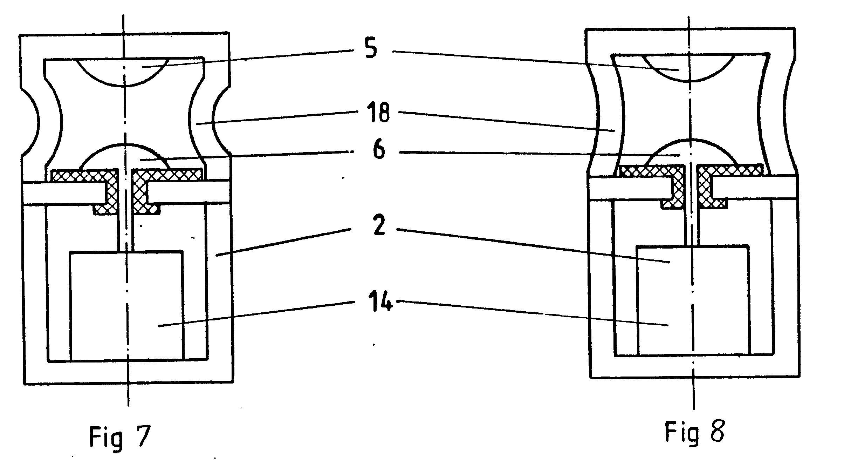

Auch durch Ausbildung des den Entladestrom leitenden Gehäuses 2 aus magnetisierbarem Metall - etwa gemäss der Fig. 7 und 8 - kann den Feldlinien Richtungsverlauf und Dichte aufgeprägt werden. Beide Längswände des Gehäuses 2 weisen je eine parallel zu den Elektroden 5 und 6 verlaufende Verengung 18 auf, die z. B. im Fall der Fig. 7 in etwa halbkreisförmigen Querschnitt besitzt und streng auf den Bereich zwischen den Elektroden begrenzt ist, womit unmittelbar die Streufelder beeinflusst werden. Im Fall der Fig. 8, dagegen ist der Verengungsquerschnitt flacher ausgebildet und verlänk über die gesamte Höhe der Wand. Wie in den Fig. 6 können auch hier die Elektroden unterschiedliche Querschnitte aufweisen.

Bei allen vorstehend beschriebenen Ausführungsbeispielen werden unervünschte Oberflächenentladungen an den z. B. aus dielektrischen oder Halbleiterschichten (Germanium oder Silizium) definierter Leitfähigkeit bestehenden Auskleidungen vermieden. Diese Schichten 12 können wie bei den Beispielen der Fig. 1 und 2 eine glatte Oberfläche aufweisen.

Selbstverständlich sind bei anderen, zeichnerisch nicht dargestellten Ausführungsbeispielen auch andere Querschnittsformen der Elektroden 6 bis 7 und Verengungen 18 denkbar.

Innerhalb des Gasraums, jedoch ausserhalb der Entladezone, kann sodann noch wenigstens eine weitere Elektrode 29 - im vorliegenden Ausführungsbeispiel sind es zwei - vorgesehen sein. Diese sogenannte Hilfselektrode ist als Platte, (Maschen-) Draht, Folie oder Lochblende ausgebildet und über einen Isolator 22 nach aussen an den einen Pol der Spannungsquelle 30, z. B. eine Batterie, geführt. Der andere Pol der Spannungsquelle liegt am Gehäuse 2 an. Auf diese Weise können im Gasraum vorhandene Ionen entfernt werden, so dass die Reinheit des Lasergases gewährleistet und eine ungewollte Feldbeeinflussung ausgeschlossen bleibt.

**Patentansprüche**

1. TE-Laser-Verstärker ( = transversal excited) von im wesentlichen symmetrischem Aufbau mit symmetrischer Entladestromvedeilung, bestehend aus einem wenigstens zwei einander gegenüberliegende Entladungsflächen aufweisenden gasumströmten Elektrodensystem (5, 6), das mit einer nach aussen führenden Hochspannungsleitung (11) in dem Resonator- bzw. Entladungsraum eines Gehäuses (2) aus Metall angeordnet ist, das bei Laserbetrieb an seiner einen Stirnseite den Laserstrahl in Richtung der anderen Stirnseite reflektierende Spiegel (15) aufweist, die mit im Bereich dieser zweiten Stirnseite befestigten teildurchlässigen Spiegeln I16) zusammenwirken, während bei Verstärkerbetrieb anstelle der Spiegel die verstärke Laserstrahlung hindurchlassende Aschlussfenster vorgesehen sind, wobei Spiegel und Fenster in den Freiräumen zwischen den Elektroden angeordnet sind, dadurch gekennzeichnet, dass an den Längwänden des Gehäuses (2) im Bereich zwischen den Elektroden (5, 6) Mittel zur magnetischen Beeinflussung des elektrischen Potentialverlaufs, d.h. der elektrischen Feldstärke, vorgesehen sind.

2. TE-Laser-Verstärker nach Anspruch 1, dadurch gekennzeichnet, dass die Mittel aus Permanentmagneten (27) oder aus Elektromagneten (28) bestehen (Fig. 6).

3. TE-Laser-Verstärker nach Anspruch 1 oder 2, dadurch gekennzeichnet, dass die zur Mittelachse der Elektroden (5, 6) parallel verlaufenden Längswände des Gehäuses (2) je eine gleichfalls parallel zu ihnen verlaufende, in das Gehäuseinnere gerichtete un dieses verengende Einbuchtung (18) aufweisen, die entweder auf den Bereich zwischen den Elektroden begrenzt ist oder aber sich jeweils über die gesamte Höhe der Längswand mit einem kontunierlich verformenden querschnitt ausdehnt (Fig. 7 und 8).

4. TE-Laser-Verstärker nach einem der Ansprüche 1 bis 3, dadurch gekennzeichnet, dass die Anregungsspannung für die zwischen den Elektroden (5, 6) stattfindende Gasentladung durch Beeinflussung der Entladungsgeometrie umpolbar ist und dass die dadurch erzielt Steuerung des Verstärkungsverlaufs im verstärkenden Medium zur Modenauswahl verwendet wird (Fig. 3 und 4).

5. TE-Laser-Verstärker nach einem der Ansprüche 1 bis 4, dadurch gekannzeichnet, dass die Längswände mit einer aus einem Dielektrikum oder einem Halbleiter mit definierter Leitfähigkeit - z. B. Germanium oder Silizium - bestehenden Schicht ausgekleidet sind.

6. TE-Laser-verstärker nach einem der Ansprüche 1 bis 5, der dadurch gekennzeichnet ist, dass in seinem Gasraum (17) ausserhalb der Entladezone wenigstens eine als Platte, (Maschen-)Draht, Folie oder Lochblende ausgebildete Hilfselektrode (29) angeordnet ist, die über einen Isolator (22) durch die Gehäusewand hindurch an den einen Pol einer Spannungsquelle (30) geführt ist, deren anderer Pol am Gehäuse (2) selbst anliegt (Fig. 2).

**Claims**

1. A TE (transversal excited) laser amplifier having a substantially symmetrical construction with symmetrical discharge current distribution, comprising an electrode system (5, 6) having at least two opposite discharge surfaces and over which flows a stream of gas, the electrode system being arranged in the resonator or discharge chamber of a metal housing (2) with a high voltage lead (11) extending to the outside, which housing, when adapted for laser operation, has mirrors (15) at one end face to reflect the laser beam in the direction of the other end face, which mirrors (75) cooperate with partially transmittent mirrors (76) attached in the region of this second end face, whereas when the housing is adapted for operation as an amplifier, the mirrors are replaced by closing-off windows which transmit the amplified laser beam, the said mirrors and windows being arranged in the spaces between the electrodes, characterised in that means for magnetically influencing the electric potential profile i.e. the field strength, are arranged on the longitudinal walls of the housing (2) in the region between the electrodes.

2. A TE laser amplifier according to claim 1, characterised in that the means comprise permanent magnets (27) or electromagnets (28) (figure 6).

3. A TE laser amplifier according to claim 1 or 2, characterised in that the longitudinal walls of the housing (2) which extend parallel to the mid-axis of the electrodes (5, 6) nave each an indentation (18) also extending parallel to the electrodes and bulging into the interior of the housing, reducing the width of the housing, said indentations being either confined to the region between the electrodes or extending each over the whole heignt of the longitudinal wall with a continuously deforming cross-section (figures 7 and 8).

4. A TE laser amplifier according to any one of claims 7 to 3, characterised in that the excitation voltage for the gas discharge taking place between the electrodes (5, 6) can be reversed in polarity by altering the discharge geometry and in that the resulting control of the amplification profile in the amplifying medium is used for mode selection (figures 3 and 4).

5. A TE laser amplifier according to any one of claims 7 to 4, characterised in that the longitudinal walls are lined with a layer comprising a dielectric or a semiconductor having a specified conductivity, e.g. germanium or silicon.

6. A TE laser amplifier according to any one of claims 7 to 5, characerised in that at least one auxiliary electrode (29) in the form of a plate, wire (mesh), foil or perforated shutter is arrangend in the gas space (17) of the amplifier, outside the discharge zone, which auxiliary electrode (29) passes through the wall of the housing by way of an insulator (22) to be attached to one terminal of a voltage source (30) whose other terminal is attached to the housing (2) itself (figure 2).

**Revendications**

1. Amplificateur laser à excitation transversale de construction essentiellement symétrique et à répartition symétrique du courant de décharge, comportant un système d'électrodes (5, 6) disposé dans le courant de gaz et présentant au moins deux surfaces de décharge disposées en regard l'une de l'autre, ledit système d'électrodes étant placé avec un conducteur (11) à haute tension qui s'étend vers l'extérieur, dans l'espace de résonance ou de décharge d'une enveloppe (2) en métal, ladite enveloppe comportant des miroirs (15) qui au cours du fonctionnement laser réfléchissent le faisceau laser d'une extrémité de l'enveloppe à l'autre et qui coopèrent avec des miroirs (16) semitransparents fixés dans la région de la seconde extrémité tandis que des fenêtres de fermeture sont prevues pour laisser passer le rayonnement laser amplifié à la place des miroirs au cours du fonctionnement en amplificateur, les miroirs et les fenêtres étant disposés dans l'espace libre entre les électrodes, cet amplificateur étant caractérisé en ce qu'il est prévu le long des parois longitudinales de l'enveloppe (2) près et entre les électrodes (5, 6), des moyens pour déterminer de façon magnétique l'allure du potentiel électrique c'est-à-dire l'intensité du champ électrique.

2. Amplificateur laser à excitation transversale suivant la revendication 1, caractérisé en ce que les moyens sont réalisés à partir d'aimants permanents (27) ou d'électroaimants (28) (fig. 6).

3. Amplificateur laser à excitation transversale, suivant la revendication 1 ou 2, caractérisé en ce que les parois longitudinales de l'enveloppe (2) s'étendant parallèlement à l'axe de symétrie des électrodes (5, 6) présentent chacune une déformation (18) s'étendant parallèlement aux parois et vers l'intérieur de l'enveloppe pour rétrécir cette dernière, et en ce que cette déformation est limitée à la zone situeé entre les électrodes ou s'étend respectivement sur la hauteur totale de la paroi longitudinale avec une section à déformation continue (Fig. 1 et 8).

4. Amplificateur laser à excitation transversale, suivant l'une des revendications 1 à 3, caractérisé en ce que la polarité de la tension d'excitation pour la décharge gazeuse avant lieu entre les électrodes (5, 6) peut être inversée par un réglage de la géométrie de décharge, et en ce que le réglage ainsi obtenu de l'allure de l'amplification dans le milieu amplificateur est utilisé pour la sélection des modes (fig. 3 et 4).

5. Amplificateur laser à excitation transversale, suivant l'une des revendications 1 à 4, caractérisé en ce que les parois longitudinales sont revêtues d'une couche réalisée en un matériau diélectrique ou en un matériau semi-conducteur d'une conductivité prédéterminée, par exemple du germanium ou du silicium.

6. Amplificateur laser à excitation transversale, suivant l'une des revendications 1 à 5, caractérisé en ce que dans son espace (17) rempli de gaz, il est prévue au moins une électrode auxiliaire (29) située à l'extérieur de la zone de décharge et réalisée à partir d'une plaque de fil (treillis), d'une feuille ou d'une plaque à diaphragme, cette électrode étant connectée par l'intermédiaire d'un isolateur (22) à travers la paroi de l'enveloppe à l'un des pôles d'une source de tension (30), l'autre pôle de cette source étant connecté à l'enveloppe elle-même (fig. 2).

Fig. 1

Fig. 2

Fig 3

Fig 4

Fig 5

Fig 6

0 052 714

Fig 7        Fig 8

5
18
6
2
14

0 052 714